# FASCICULE DE BREVET EUROPEEN

(11) **EP 1 636 632 B1**
(45) Date de publication et mention de la délivrance du brevet: **29.02.2012**
(21) Numéro de dépôt: 04767352.0
(22) Date de dépôt: 16.06.2004
(51) Int. Cl.: G02C 5/22

(54) **MONTURE DE LUNETTES A SUR-OUVERTURE AUTOUR D'UN POINT D'APPUI DEPORTE**
BRILLENRAHMEN MIT ARMEN, DIE WEIT UM EINEN VERSETZTEN STÜTZPUNKT HERUM GEÖFFNET WERDEN KÖNNEN
SPECTACLE FRAME COMPRISING ARMS WHICH CAN BE OPENED OUT WIDE AROUND AN OFFSET SUPPORT POINT

(30) Priorité: 20.06.2003 FR 0307454
(43) Date de publication de la demande: 22.03.2006
(73) Titulaire: Miklitarian, Alain, 75014 Paris (FR); Delamour, Dominique, 78490 Les Mesnuls (FR); Rodi, Olivier, 78950 Gambais (FR); Chene, Richard, 92200 Neuilly-sur-Seine (FR)
(72) Inventeur: Miklitarian, Alain, 75014 Paris (FR); Delamour, Dominique, 78490 Les Mesnuls (FR); Rodi, Olivier, 78950 Gambais (FR); Chene, Richard, 92200 Neuilly-sur-Seine (FR)
(74) Mandataire: Plaçais, Jean Yves
(86) Numéro de dépôt international: PCT/FR2004/001489
(87) Numéro de publication internationale: WO 2004/113996

(56) Documents cités:
- EP-A- 0 177 821
- EP-A- 0 266 307
- EP-A- 0 889 347
- EP-A- 0 992 831
- FR-A- 2 816 072
- US-A- 3 549 246
- US-A- 4 991 258
- US-A- 5 515 575

## Description

La présente invention concerne une monture de lunettes comportant une charnière de type "télescopique".

Les charnières dites "télescopiques", qui comportent, comme la plupart des charnières, deux éléments, en appui l'un sur l'autre, connectés par un axe de rotation, l'un au moins des deux éléments étant mobile, ont la particularité d'inclure, dans l'élément mobile, un tirant monté coulissant dans un logement et comportant un moyen pour coopérer avec l'axe de rotation ainsi qu'un ressort de rappel.

Lors de la mise en place de montures sur le visage d'un utilisateur, de telles charnières télescopiques sont avantageuses en ce sens qu'elles permettent une sur-ouverture des branches, généralement de 2 à 8°, qui facilite cette mise en place, surtout si elle est faite par un tiers (l'opticien). Les charnières télescopiques améliorent aussi la tenue de la monture sur le visage dans la mesure où, cette position de sur-ouverture étant instable, les branches, une fois lâchées par la personne qui pose la monture, viennent en appui sur les côtés du visage de l'utilisateur, sous l'effet du ressort de rappel.

Il est important, pour le confort de l'utilisateur, que l'appui des branches sur les côtés de son visage soit suffisant pour maintenir les montures de lunettes en position et soit limité pour ne pas être insupportable, l'intensité de cet appui dépendant de l'effort de rappel.

Les charnières télescopiques sont fabriquées en grande série et livrées assemblées aux fabricants de lunettes, de telle sorte que ces derniers ou l'opticien ne peuvent pas en régler l'effort de rappel.

En position de sur-ouverture, l'extrémité côté charnière des branches, dite extrémité proximale, vient en appui en un point de l'extrémité côté charnière, dite extrémité proximale, d'un tenon appartenant à la face de monture, créant ainsi un bras de levier dont l'importance est proportionnelle à l'épaisseur des branches.

Lorsque les charnières sont solidarisées à des branches de faible épaisseur, par exemple en métal, ce point d'appui est situé à proximité de l'axe de rotation des charnières télescopiques.

Par contre, lorsque les charnières télescopiques sont solidarisées à des branches épaisses, comme le sont usuellement les branches en acétate ou les branches en matériau thermoplastique injecté, qui sont des matériaux d'usage courant dans le domaine des montures de lunettes, le point d'appui se trouve notablement décalé par rapport à l'axe de rotation des charnières, avec pour résultat que, pour le même angle de sur-ouverture, l'effort de rappel des branches devient très supérieur à ce qu'il est dans le cas de branches peu épaisses, au point de nuire au confort du porteur. La seule possibilité qui s'offre à l'opticien pour y remédier est de déformer les branches de la monture, opération d'autant plus délicate que les branches sont épaisses.

L'invention propose une solution pour que l'effort de rappel du ressort reste identique d'un modèle de monture à l'autre, et plus précisément quelle que soit l'épaisseur de la monture.

Le type de monture de lunettes auquel s'applique l'invention est, par exemple, illustré par US 4 991 258 et il comprend une face de monture sur laquelle deux branches sont articulées au moyen de charnières télescopiques permettant aux branches de passer
- d'une position d'ouverture stable, dans laquelle l'extrémité côté charnière, dite "extrémité proximale", des branches est parallèle et à proximité immédiate de l'extrémité côté charnière, dite "extrémité proximale", d'un tenon appartenant à la face de monture, lesdites extrémités proximales définissant un plan de coïncidence passant entre les charnons de ladite charnière,
- à une position de sur-ouverture instable par pivotement autour d'un point d'appui appartenant audit plan de coïncidence, les branches ayant une face extérieure et une face intérieure, et la monture ayant un plan de symétrie orthogonal au plan général de la face de monture.

Selon l'invention, **et à la différence de** US 4 991 258, ledit point d'appui est situé plus près dudit plan de symétrie que la face extérieure des branches prise au niveau dudit plan de coïncidence.

Cette position du point d'appui, qui peut être décrite autrement comme "en retrait par rapport à la face extérieure de la branche", fait qu'une monture à branches épaisses se comporte comme une monture à branches minces, avec pour résultat un effort moindre sur la charnière pour obtenir le même angle de sur-ouverture.

Dans un mode de réalisation particulier, l'extrémité proximale de la branche et celle du tenon présentent une zone de coïncidence et le point d'appui est situé sur le bord extérieur de ladite zone de coïncidence.

Avantageusement, l'extrémité proximale de la branche et/ou celle du tenon présente un évidement, depuis la face extérieure de ladite branche et/ou celle dudit tenon. Il s'ensuit une réduction de l'épaisseur de la zone de coïncidence, par rapport à ce qu'elle serait si la zone de coïncidence avait l'épaisseur de la branche, et cette réduction peut aller jusqu'à donner à cette zone l'épaisseur d'une branche métallique.

De préférence, ledit évidement, qui peut, par exemple, être un chanfrein, épargne l'extrémité proximale de la branche et/ou celle du tenon sur une épaisseur inférieure à 1,5 mm ; autrement dit, la zone de coïncidence a une épaisseur inférieure à 1,5 mm.

Dans un autre mode de réalisation particulier, l'épaisseur de la zone de coïncidence peut même être quasi nulle ou nulle. Ainsi, ledit évidement peut être déterminé par un écart de 1 mm à 5 mm entre l'extrémité proximale de la branche et celle du tenon auquel cas le point d'appui est situé au niveau de la charnière elle-même. Ce mode de réalisation est applicable économiquement aux branches réalisées en acétate ou en matériau thermoplastique injecté. Il suffit, en effet, de prévoir cette géométrie dans l'usinage de telles branches, ou dans la forme du moule d'injection, pour obtenir les branches voulues.

Selon l'art antérieur, dans la configuration d'ouverture normale stable, les branches sont sensiblement perpendiculaires à la face de monture. A cette fin, les charnières sont conçues de telle sorte qu'en position d'ouverture normale, les faces extérieures du tenon et de la branche soient alignées lorsque les extrémités proximales sont accolées. Il s'ensuit qu'en position de sur-ouverture d'un angle α, généralement de 2 à 8°, une "cassure" de ligne peu esthétique se produit entre la face extérieure du tenon qui est solidarisé à la face de la monture et la face extérieure de la branche.

Pour remédier à cet inconvénient esthétique, l'invention propose de tenir compte de l'angle α dans la conception de la monture. A cette fin, en position d'ouverture normale stable, la face extérieure de la branche fait un angle rentrant par rapport au plan de la face extérieure du tenon.

L'invention sera mieux comprise à la lecture de la description suivante faite en référence aux dessins annexés, dans lesquels :
- la figure la est une vue de dessus de la zone d'articulation télescopique d'une monture de lunettes à branches fines de l'art antérieur, en position d'ouverture stable.
- La figure 1b est une vue de dessus de la même zone d'articulation qu'à la figure 1a mais en position de sur-ouverture instable ;
- la figure 2a est une vue de dessus de la zone d'articulation télescopique d'une monture de lunettes à branches épaisses de l'art antérieur, en position d'ouverture stable ;
- la figure 2b est une vue de dessus de la même zone d'articulation qu'à la figure 2a mais en position de sur-ouverture instable ;
- la figure 3a est une vue de dessus de la zone d'articulation télescopique d'une monture à branches épaisses selon un premier mode de réalisation de l'invention, en position d'ouverture stable ;
- la figure 3b est une vue de dessus de la même zone d'articulation qu'à la figure 3a mais en position de sur-ouverture instable ;
- la figure 4a est une vue de dessus de la zone d'articulation télescopique d'une monture à branches épaisses selon un deuxième mode de réalisation de l'invention, en position d'ouverture stable ;
- la figure 4b est une vue de dessus de la même zone d'articulation qu'à la figure 4a mais en position de sur-ouverture instable ;
- la figure 5a est une vue de dessus de la zone d'articulation télescopique d'une monture à branches épaisses selon un troisième mode de réalisation de l'invention, en position d'ouverture stable ; et
- la figure 5b est une vue de dessus de la même zone d'articulation qu'à la figure 5a mais en position de sur-ouverture instable.

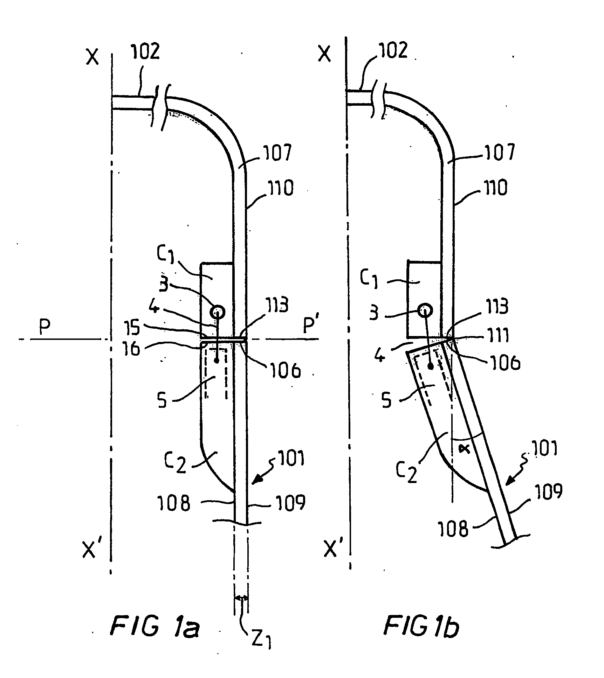

La figure 1 représente une partie de l'une des deux branches fines 101 d'une monture de lunettes de l'art antérieur, et une partie de la face de monture 102 sur laquelle elle est articulée au moyen d'une charnière télescopique C1,C2 dont on a schématisé le point de pivotement 3, le tirant 4 et le ressort de rappel 5. La branche 101 comporte une extrémité 106 côté charnière, appelée "extrémité proximale", qui est parallèle et à proximité immédiate d'une extrémité 113 côté charnière, appelée "extrémité proximale" d'un tenon 107 appartenant à la face de monture 102. Les extrémités proximales 106 et 113 ont une zone de vis-à-vis ou zone de coïncidence Z1. Les charnons C1 et C2 ont, de même, des extrémités proximales en vis-à-vis 15 et 16. La zone de coïncidence Z1 appartient à un plan de coïncidence P, P' passant entre les faces proximales 15 et 16 des charnons et les extrémités proximales 106 et 113, respectivement, de la branche 101 et du tenon 107. La branche 101 présente une face intérieure 108 et une face extérieure 109. A la figure 1a, la branche 101 est en position d'ouverture stable et sa face extérieure 109 est alignée avec celle 110 du tenon 107.

La figure 1b représente la même portion de monture que la figure 1a, mais passée en position de sur-ouverture instable par pivotement autour d'un point d'appui 111 situé sur le bord extérieur de la zone de coïncidence Z1, à l'encontre de la force du ressort 5. Dans cette position, la face extérieure 109 de la branche 101 fait un angle α compris entre 2 et 8° avec la face extérieure 110 du tenon 107 de la face de monture 102.

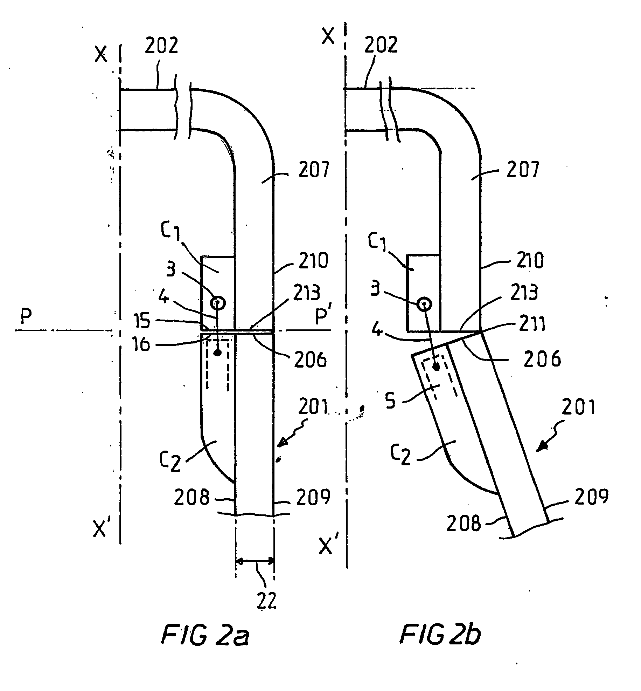

Les figures 2a et 2b, où les éléments inchangés par rapport aux figures 1a,1b conservent les mêmes références et où les éléments modifiés mais ayant une fonction similaire ont pour références celles des figures 1a,1b augmentées de 100, ne diffèrent, respectivement, des figures 1a et 1b que par le fait que la face 202 et la branche 201 sont, cette fois, épaisses.

Il s'ensuit, comme il ressort de la comparaison des figures 2a et 2b, que la zone de coïncidence Z2 a une épaisseur supérieure à l'épaisseur de la zone Z1 et, par suite, que la distance entre le point d'appui 211 et le point de pivotement 3 de la charnière est nettement plus grande dans le cas de la branche épaisse 201 que dans le cas de la branche fine 101. La conséquence est que, pour un même angle de sur-ouverture, une plus grande longueur de tirant 4 doit être extraite de la charnière dans le cas d'une branche épaisse 201, ce qui implique que le ressort 5 doit être davantage comprimé. Par suite, le ressort exerce une plus grande force de rappel, inconfortable pour le porteur.

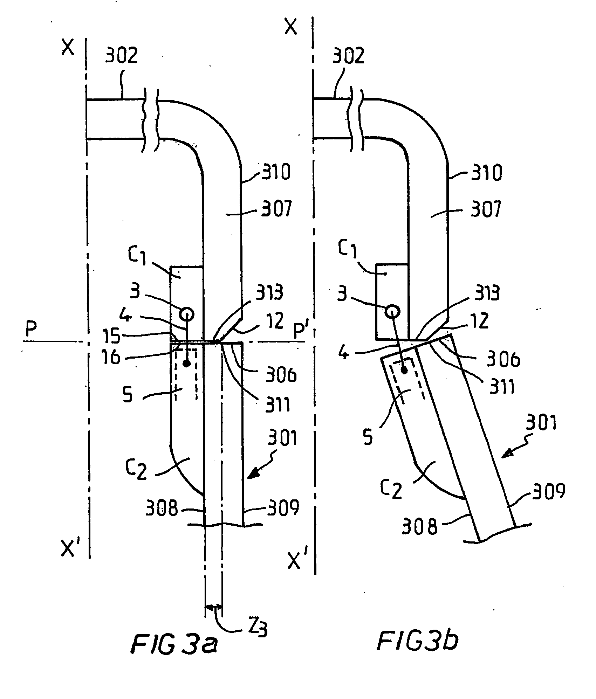

Les figures 3a et 3b, où les éléments inchangés par rapport aux figures 1a,1b conservent les mêmes références et où les éléments modifiés mais ayant une fonction similaire ont pour références celles des figures 1a,1b augmentées de 200, ne diffèrent, respectivement, des figures 2a et 2b que par le fait que l'extrémité proximale 313 du tenon 307 présente un chanfrein 12. Grâce à ce chanfrein 12, la zone de coïncidence Z3 est ramenée à une épaisseur proche de celle de la zone de coïncidence Z1 et le point d'appui 311 est plus près du point de pivotement 3 qu'il ne l'est à la figure 2b, pour la même épaisseur de branche. En fait, il peut être à la même distance du point de pivotement 3 que dans le cas de la figure 1b, illustrant le cas d'une branche fine 101.

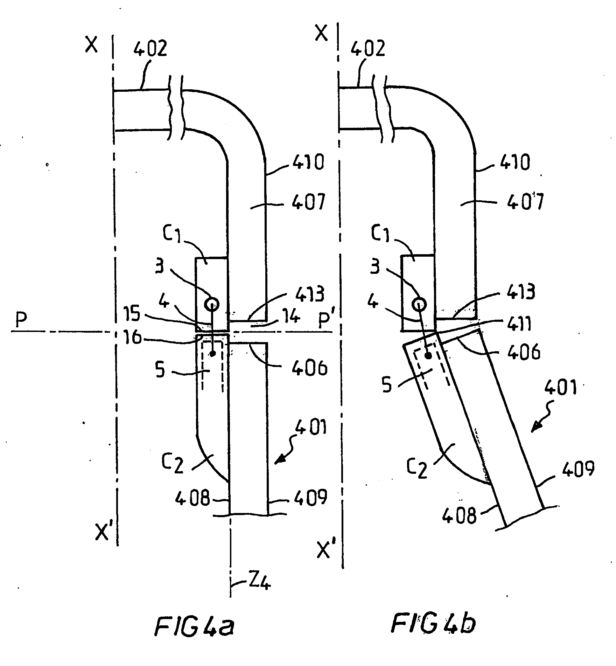

Les figures 4a et 4b, où les éléments inchangés par rapport aux figures 1a,1b conservent les mêmes références et où les éléments modifiés mais ayant une fonction similaire ont pour références celles des figures 1a,1b augmentées de 300, représentent l'une des deux branches 401 d'une monture de lunettes selon un second mode de réalisation de l'invention. Cette fois, il est prévu un vide 14 entre l'extrémité proximale 406 de la branche 401 et l'extrémité proximale 413 du tenon 407. La zone de coïncidence Z4 devient d'épaisseur nulle et le point d'appui 411 vient se confondre avec le bord extérieur de la zone de coïncidence entre les faces d'extrémité en vis-à-vis 15 et 16 des charnons C1 et C2 de la charnière. Grâce à ce vide 14, le point d'appui 411 est le plus près possible du point de pivotement 3 puisqu'il est encore plus près que dans le cas des branches minces des figures 1a,1b, alors que l'on est dans le cas d'une monture à branches épaisses.

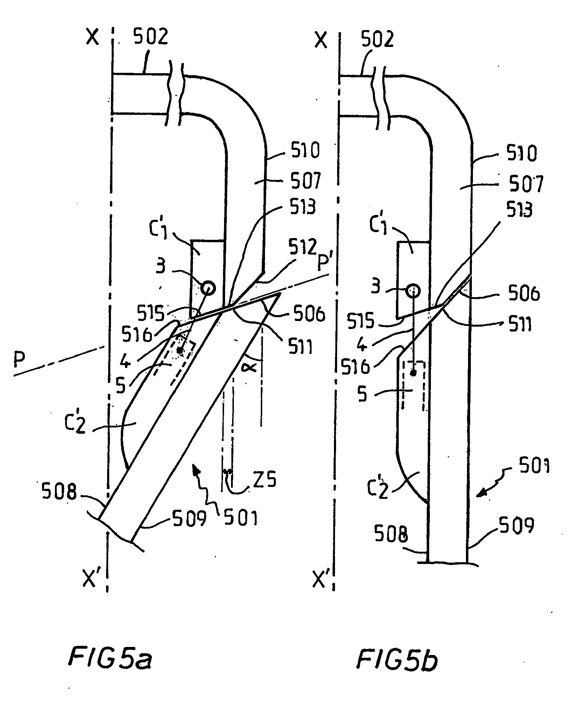

Les figures 5a et 5b, où les éléments inchangés par rapport aux figures 1a,1b conservent les mêmes références et où les éléments modifiés mais ayant une fonction similaire ont pour références celles des figures 1a,1b augmentées de 400, représentent l'une des deux branches 501 d'une monture de lunettes selon un troisième mode de réalisation de l'invention. A la différence des formes d'exécution précédentes, en position de sur-ouverture instable, la face extérieure 509 de la branche 501 et la face extérieure 510 du tenon 507 sont alignées en position de sur-ouverture instable, qui est la position de port. Pour obtenir ce résultat esthétique, des modifications ont été apportées à l'extrémité proximale 506 de la branche 501 et à l'extrémité proximale 513 du tenon 507, ainsi qu'aux faces d'extrémité en vis-à-vis 515 et 516 de la charnière C1',C2'. Plus précisément, ces extrémités 506, 513, 515 et 516 sont biseautées de telle sorte qu'en position d'ouverture stable (Figure 5a), la face extérieure 509 de la branche 501 fasse un angle rentrant α par rapport au plan de la face extérieure 510 du tenon 507. A part cette disposition particulière, la forme d'exécution des figures 5a,5b est du même type que celle des figures 3a,3b, en ce sens que la zone de coïncidence Z5 est d'une épaisseur amoindrie par chanfreinage du tenon 507 selon 512. Il s'ensuit que le point d'appui 511 est rapproché du point de pivot.

Il est bien entendu que l'invention n'est pas limitée aux formes d'exécution décrites et représentées. Ainsi, par exemple, le chanfrein 12 ou 512 pourrait être créé dans l'extrémité proximale de la branche au lieu de l'être dans l'extrémité proximale du tenon. Par ailleurs, un évidement réalisé sous une autre forme qu'un chanfrein, serait tout aussi possible.

## Revendications

1. Monture de lunettes du type comprenant une face de monture (302; 402; 502) sur laquelle deux branches (301; 401; 501) sont articulées au moyen de charnières télescopiques permettant aux branches de passer
• d'une position d'ouverture stable, dans laquelle l'extrémité (306; 406; 506) côté charnière, dite "extrémité proximale", des branches est parallèle et à proximité immédiate de l'extrémité (313; 413; 513) côté charnière, dite "extrémité proximale", d'un tenon (307; 407; 507) appartenant à la face de monture, lesdites extrémités proximales définissant un plan de coïncidence (P,P') passant entre les charnons (C1,C2 ; C1',C2') de ladite charnière,
• à une position de sur-ouverture instable par pivotement autour d'un point d'appui (311; 411; 511) appartenant audit plan de coïncidence, les branches ayant une face extérieure (309; 409; 509) et une face intérieure (308; 408; 508), et la monture ayant un plan de symétrie orthogonal (X,X') au plan général de la face de monture (302; 402; 502),
**caractérisée en ce que** ledit point d'appui (311; 411; 511) est situé plus près dudit plan de symétrie (X,X') que la face extérieure (309; 409; 509) des branches prise au niveau dudit plan de coïncidence (P,P').

2. Monture selon la revendication 1, **caractérisée en ce que** l'extrémité proximale (306; 406; 506) de la branche et celle (313; 413; 513) du tenon présentent une zone de coïncidence (Z3 ; Z4 ; Z5) et **en ce que** ledit point d'appui (311; 411; 511) est situé sur le bord extérieur de ladite zone de coïncidence.

3. Monture selon la revendication 2, **caractérisée en ce que** l'épaisseur de la zone de coïncidence va d'une épaisseur (Z3 ; Z5) inférieure à celle de la branche (301 ;501) à une épaisseur nulle (Z4).

4. Monture selon l'une quelconque des revendications 1 à 3, **caractérisée en ce que** l'extrémité proximale (306; 406; 506) de la branche et/ou celle (313; 413; 513) du tenon présente un évidement, depuis la face extérieure (309; 409; 509) de ladite branche et/ou celle (310; 410; 510) dudit tenon.

5. Monture selon la revendication 4, **caractérisée en ce que** ledit évidement épargne l'extrémité proximale (306; 506) de la branche et/ou celle (313; 513) du tenon sur une épaisseur inférieure à 1,5 mm.

6. Monture selon la revendication 4 ou 5, **caractérisée en ce que** ledit évidement est un chanfrein (12 ; 512).

7. Monture selon la revendication 4, **caractérisée en ce que** ledit évidement est déterminé par un écart de 1 mm à 5 mm entre l'extrémité proximale (406) de la branche et celle (413) du tenon.

8. Monture selon l'une quelconque des revendications 1 à 7, **caractérisée en ce que**, en position d'ouverture normale stable, la face extérieure de la branche (509) fait un angle rentrant (α) par rapport au plan de la face extérieure (510) du tenon.

## Claims

1. A spectacle frame of the type comprising a frame face (302; 402; 502) on which two sides (301; 401; 501) are articulated by telescopic hinges allowing the sides to move
• from a stable open position, in which the hinge-side end (306; 406; 506), called the "proximal end", of the sides is parallel and in immediate proximity to the hinge-side end (313;413;513), called the "proximal end", of a stub (307; 407; 507) forming part of the frame face, the said proximal ends defining a meeting plane (P,P'), passing between the knuckles (C1,C2; C1', C2') of the said hinge,
• to an unstable over-opened position, by pivoting about a bearing point (311; 411; 511) lying in the said meeting plane, the sides having an external surface (309; 409; 509) and an internal surface (308; 408; 508), and the frame having a plane of symmetry (X,X'), that is orthogonal to the general plane of the frame face (302; 402; 502),
**characterized in that** the said bearing point (311; 411; 511) is located closer to the said plane of symmetry, (X,X') than the external surface (309; 409; 509) of the sides, measured at the level of the said meeting plane (P,P').

2. A frame according to claim 1, **characterized in that** the proximal end (306; 406; 506) of the side and that (313;413;513) of the stub have a meeting zone (Z3; Z4; Z5) and **in that** the said bearing point (311; 411; 511) is located on the outer edge of the said meeting zone.

3. A frame according to claim 2, **characterized in that** the thickness of the meeting zone goes from a thickness (Z3; Z5) smaller than that of the side (301; 501) to a zero thickness (Z4).

4. A frame according to any of claims 1 to 3, **characterized in that** the proximal end (306; 406; 506) of the side and/or that (313;413;513) of the stub has a recess, from the external surface (309; 409; 509) of the said side and/or that (310; 410; 510) of the said stub.

5. A frame according to claim 4, **characterized in that** said recess reduces the proximal end (306; 406; 506) of the side and/or that (313;513) of the stub to a thickness of less than 1.5 mm.

6. A frame according to claim 4 or 5, **characterized in that** said recess is a chamfer (12; 512).

7. A frame according to claim 4, **characterized in that** the said recess is in the form of a gap of 1 mm to 5 mm between the proximal end (406) of the side and that (413) of the stub.

8. A frame according to any of claims 1 to 7, **characterized in that**, in the stable normal open position, the external surface of the side (509) makes an angle (α) that is re-entrant with respect to the plane of the external surface (510) of the stub.

## Patentansprüche

1. Brillenfassung vom Typ mit einer Fassungsfläche (302; 402; 502) an der zwei Arme (301, 401; 501) mittels Teleskopscharnieren angelenkt sind, die den Armen ermöglichen, sich zu bewegen
• von einer stabilen Öffnungsposition, in der sich das Ende (306; 406; 506) auf der Scharnierseite, genannt "proximales Ende", der Arme parallel und in unmittelbarer Nähe des Endes (313; 413; 513) auf der Scharnierseite, genannt "proximales Ende" befindet, eines Zapfens (307; 407; 507), der zur Fassungsfläche gehört, wobei die proximalen Enden eine gemeinsame Ebene (P, P') definieren, die sich zwischen den Scharnierelementen (C1, C2; C1', C2') des Scharniers erstreckt,
• zu einer Position einer instabilen Überöffnung durch Schwenken um einen Haltepunkt (311; 411; 511), der zu der gemeinsamen Ebene gehört, wobei die Arme eine Außenseite (309; 409; 509) und eine Innenseite (308; 408; 508) aufweisen, und wobei die Fassung eine senkrechte Symmetrieebene (X, X') zu der allgemeinen Ebene der Fassungsfläche (302; 402; 502) aufweist,
**dadurch gekennzeichnet, dass** der Haltepunkt (311; 411; 511), betrachtet auf der Höhe der gemeinsamen Ebene (P, P'), sich näher an der Symmetrieebene (X, X') als an der Außenseite (309; 409; 509) der Arme befindet.

2. Fassung nach Anspruch 1, **dadurch gekennzeichnet, dass** das proximale Ende (306; 406; 506) des Armes und jenes (313; 413, 513) des Zapfens eine gemeinsame Zone (Z3; Z4; Z5) aufweisen, und dass der Haltepunkt (311; 411; 511) am Außenrand der gemeinsamen Zone angeordnet ist.

3. Fassung nach Anspruch 2, **dadurch gekennzeichnet, dass** die Dicke der gemeinsamen Zone von einer Dicke (Z3; Z5) ausgeht, die kleiner ist als jene des Arms (301; 501) zu einer Dicke null (Z4).

4. Fassung nach einem der Ansprüche 1 bis 3, **dadurch gekennzeichnet, dass** das proximale Ende (306; 406; 506) des Armes und/oder jenes (313; 413; 513) des Zapfens von der Außenseite (309; 409; 509) des Arms und/oder jener (310; 410; 510) des Zapfens eine Aussparung aufweist.

5. Fassung nach Anspruch 4, **dadurch gekennzeichnet, dass** die Aussparung das proximale Ende (306; 506) des Arms und/oder jenes (313; 513) des Zapfens spart über eine Dicke, die geringer ist als 1,5 mm.

6. Fassung nach Anspruch 4 oder 5, **dadurch gekennzeichnet, dass** die Aussparung eine Abschrägung (12; 512) ist.

7. Fassung nach Anspruch 4, **dadurch gekennzeichnet, dass** die Aussparung bestimmt ist durch einen Abstand von 1 mm bis 5 mm zwischen dem proximalen Ende (406) des Armes und jenem (413) des Zapfens.

8. Fassung nach einem der Patentansprüche 1 bis 7, **dadurch gekennzeichnet, dass** in normaler stabiler Öffnungsposition die Außenseite des Arms (509) einen überstumpfen Winkel (α) zur Ebene der Außenseite (510) des Zapfens bildet.
